# EUROPEAN PATENT APPLICATION

(11) **EP 4 567 508 A1**
(43) Date of publication of application: **11.06.2025**
(21) Application number: 24215465.6
(22) Date of filing: 26.11.2024
(51) Int. Cl.: G02F 1/16757, G02F 1/1675

(54) **ELECTROPHORETIC CAPSULES ENABLING BLOCKING OF VISIBLE AND NON-VISIBLE WAVELENGTHS**

(30) Priority: 04.12.2023 US 202318528391
(71) Applicant: The Boeing Company, Arlington, VA 22202 (US)
(72) Inventor: ADAMS, Scott Alan, Arlington, 22202 (US); GREENE, Edward Ryan, Arlington, 22202 (US); CLEM, Paul Gilbert, Arlington, 22202 (US)
(74) Representative: Lissandrini, Marco

(57) **Abstract**

A system for blocking one or more wavelengths, including a window is described, including a detector capable of detecting a target wavelength bandwidth and a first layer connected to the detector. The system includes a second layer that is substantially parallel to the first layer and also connected to the detector. The system includes a plurality of capsules disposed between the first layer and the second layer, and a surface charge-controlled layer in proximity to the first layer or the second layer, connected to the detector and configured to switch one or more of the plurality of capsules from a first state to a second state upon detection of the target wavelength bandwidth.

## Description

### TECHNICAL FIELD

The present teachings relate generally to the blocking of targeted wavelengths and, more particularly, to the use of electrophoretic capsules for switchable blocking of wavelengths.

### BACKGROUND

The blocking of particular wavelength range in aerospace can provide a protection against intrusion upon an aircraft or aerospace vehicle by targeted attack of a laser or other harmful electromagnetic radiation during operation. Laser attacks on aircraft can have serious consequences, including blinding pilots, damaging sensitive equipment, or causing temporary or permanent loss of control. To address these and similar types of threats, the blocking of specific wavelength ranges in various areas of an aircraft, particularly in windows, can provide a suitable means of protection.

Laser attacks on aircraft involve the use of high-power lasers to target the cockpit windows, sensors, or other critical components. Such attacks can occur during takeoff, landing, or while in flight. Cockpit windows can also be a particularly vulnerable area of an aircraft in terms of laser or other targeted attacks. In these applications, specialized coatings or materials that can block or absorb harmful laser wavelengths while maintaining optical clarity for the pilots are of interest. Green or blue lasers use specific wavelengths of light and are harmful to the human eye and sensitive equipment. The development of materials that can selectively block certain wavelengths including the aforementioned and other spectral regions without sacrificing transparency can be a significant technical challenge. Additional real-time monitoring and detection systems to identify such threats and respond accordingly with a temporary or switchable filter or reflector for these types of threats are also of interest.

Therefore, the ability to electrically or otherwise automatically switch pigments in a filter or coating which can intentionally absorb, reflect, transmit, or make transparent to electromagnetic radiation at one or more wavelengths is of interest.

### SUMMARY

The following presents a simplified summary in order to provide a basic understanding of some aspects of one or more embodiments of the present teachings. This summary is not an extensive overview, nor is it intended to identify key or critical elements of the present teachings, nor to delineate the scope of the disclosure. Rather, its primary purpose is merely to present one or more concepts in simplified form as a prelude to the detailed description presented later. The scope of protection is determined by the appended claims.

A window is disclosed, including a first layer and a second layer that is substantially parallel to the first layer. The window also includes a plurality of capsules disposed between the first layer and the second layer, and where the plurality of capsules may include a functional additive contained within each of the plurality of capsules, and the functional additive is switchable to a first state and a second state. Implementations of the window can include where the functional additive may include a negatively charged component and a positively charged component. The functional additive or pigment absorbs light in a wavelength bandwidth. The wavelength bandwidth is from 520 nm to about 532 nm or from about 630 nm to about 670 nm. The functional additive may include a plurality of quantum dots. The functional additive may include one or more pigments. The functional additive may include a colorant. The first layer and the second layer are transparent in a wavelength range of from about 380 nm to about 700 nm. The first layer may include polycarbonate, glass, or a combination thereof, and the second layer may include polycarbonate, glass, or a combination thereof. The window may include a surface charge-controlled layer in proximity to the first layer or the second layer. A first state may include transparency in a first wavelength bandwidth and a second state may include absorbance in a second wavelength bandwidth. The first wavelength bandwidth is between a wavelength of 380 nm to about 700 nm. The second wavelength bandwidth is between a wavelength of 380 nm to about 700 nm. A size of each of the plurality of capsules is from about 15 to about 100 microns. A carrier layer may include the plurality of capsules and permit free movement of each of the plurality of capsules.

Another window is disclosed and includes a first layer and a second layer that is substantially parallel to the first layer. The window includes a plurality of capsules disposed between the first layer and the second layer, and where the plurality of capsules may include a functional additive may include a negatively charged component and a positively charged component contained within each of the plurality of capsules, and the functional additive is switchable to a first state and a second state. Implementations of the window include windows where a gap between the first layer and the second layer is from about 80 microns to about 150 microns. The window can be a component of eyewear. The window can be a component of an aerospace vehicle.

A system for blocking a wavelength is disclosed. The system for blocking a wavelength also includes a detector capable of detecting a target wavelength bandwidth and a first layer connected to the detector. The system for blocking a wavelength also includes a second layer that is substantially parallel to the first layer and connected to the detector. The system also includes a plurality of capsules disposed between the first layer and the second layer. The system also includes a surface charge-controlled layer in proximity to the first layer or the second layer, connected to the detector and configured to switch one or more of the plurality of capsules from a first state to a second state upon detection of the target wavelength bandwidth, and where the plurality of capsules may include a functional additive that may include a negatively charged component and a positively charged component contained within each of the plurality of capsules, the functional additive is switchable to a first state and a second state, and the functional additive absorbs the target wavelength bandwidth upon switching to the second state.

The features, functions, and advantages that have been discussed can be achieved independently in various implementations or can be combined in yet other implementations further details of which can be seen with reference to the following description. Nevertheless, the scope of protection is determined by the appended claims.

### BRIEF DESCRIPTION OF THE DRAWINGS

The accompanying drawings, which are incorporated in and constitute a part of this specification, illustrate embodiments of the present teachings and together with the description, serve to explain the principles of the disclosure. In the figures:
FIG. 1 is a schematic of an aerospace vehicle, in accordance with the present disclosure.
FIG. 2 is an exemplary schematic illustrating an article or window incorporating a structure including one or more pluralities of electrophoretic capsules, in accordance with the present disclosure.
FIGS. 3A and 3B are schematic of an electrophoretic capsule, in a first state and a second state, respectively, in accordance with the present disclosure.
FIG. 4 is a plot depicting a number of wavelength ranges corresponding to several exemplary pigments or functional additives, in accordance with the present disclosure.

It should be noted that some details of the figures have been simplified and are drawn to facilitate understanding of the present teachings rather than to maintain strict structural accuracy, detail, and scale.

### DETAILED DESCRIPTION

Reference will now be made in detail to exemplary embodiments of the present teachings, examples of which are illustrated in the accompanying drawings. Wherever possible, the same reference numbers will be used throughout the drawings to refer to the same, similar, or like parts.

The present disclosure relates to an article and a window and structure thereof, such as a wavelength blocking film, that utilize functional additives contained within electrophoretically controllable capsules to control light transmission through the structure. The functional additive is designed to absorb light in specific wavelength bandwidths as well as incorporate a positive or negative charge, making the article and window effective at blocking visible wavelength of light in a switchable fashion. The article or window can be used in various industries, including aerospace, automotive, agriculture, and consumer electronics.

Existing solutions for blocking specific wavelengths of light include applying coatings or tints to surfaces or transparencies. However, these solutions cannot be turned on or off once applied and may restrict visibility in times when the blocking of specific wavelengths is not desired. Examples of the present disclosure also provide the ability to electrically switch pigments in a filter or coatings, which can intentionally absorb, reflect, transmit, or make transparent to electromagnetic radiation at one or more wavelengths. This allows for specific wavelengths to be blocked on-demand, such as protecting a flight crew from consumer laser attacks or providing a switchable reflector for specific wavelengths that can be activated depending on the condition.

The technical features of the present disclosure further include the incorporation of organic and/or inorganic pigments into electrophoretic particle capable of filtering specific wavelengths. The functional additive and the capsule switches between a first state and a second state using electrophoretic switching, applied externally to each of a plurality of particles, also referred to as capsules or microcapsules, and it can absorb light in the visible range, near-infrared, or ultraviolet. In other examples, the absorbed light or electromagnetic radiation can be outside the visible range. The surface charge-controlled layer connects to a detector through an electrical connection, and a surrounding window structure can include materials such as polycarbonate, glass, or a combination thereof. The gap between the first and second layers of the window or film affects the functionality of the article and window by controlling the amount of light that can pass through the window or holding the capsules within a carrier layer between the first and second layers. The article, window, or film can be designed to meet specific requirements for different applications, such as reflecting light, blocking or absorbing light, or for use in lighting or windows for greenhouses or agricultural environments.

The examples described herein are versatile and can be used in combination with other optics technologies, such as lenses or mirrors, as well as windows. The electrophoretically controlled articles can be designed or packaged to perform in terms of thermal stability and durability. The article and window can be made of known materials or a combination of materials known in conventional window fabrication and can be designed to be bendable or flexible, depending on the specific requirements of the application or installation. The maximum gap between the first and second layers of the electrophoretically controlled film is from about 80 to about 150 microns, depending on the application, and the plurality of capsules or the surrounding carrier layer can be filled with a liquid or gel-like substance that permits free rotation or motion of the electrophoretic capsules.

The present disclosure provides additional advantages to the field of aviation, astronautics, and the like, by providing an article and a window that can be used in these various industries and can block specific wavelengths of light on-demand. The technical features described herein provide advantages over existing solutions, such as the ability to electrically switch pigments in a filter or coatings and enhancing the versatility of the article, window, and thereby the performance of the vehicle or structure in which the window or article is incorporated. The examples of the present disclosure can be used in a variety of applications, including aerospace, automotive, and consumer electronics, and can provide protection from specific wavelengths of light that may be harmful or unwanted.

The present disclosure includes the use of electrophoretic capsules, which incorporates technology that enables the manipulation and control of pigment particles within capsules to create versatile displays or block particular wavelengths, as in the object of the articles described herein. Electrophoretic capsules can be characterized and defined by the structure, composition, incorporated pigments, respective absorption ranges of the pigments, colors of the pigments, and bi-stabile nature of the electrophoretic capsules.

The electrophoretic capsules consist of a microencapsulated core that encapsulates electrically charged pigment particles or functional additives suspended in a clear, dielectric fluid. A flexible, transparent electrode surrounds the capsules, enabling the application of an electric field to control the position of the pigments within each capsule. The capsules can be arranged in an array to form a display, or in examples of the present disclosure, a targeted wavelength blocking or absorbing article. In examples, the structure of the electrophoretic capsules is similar to that of E Ink^{®} displays, wherein microcapsules filled with charged pigments are sandwiched between two electrodes.

Eink^{®} is a commercially available electrophoretic display technology that can include millions of microcapsules, containing charged pigments that can be manipulated by an electric field to create a printed-like appearance, similar to those as described herein. A display using these capsules can hold its appearance with no power required until the display needs to be changed, making it a more sustainable and fieldable option to LED or LCD displays. Displays can be available in black and white or multicolor options, can be made to be flexible, and have outdoor and indoor use cases across multiple environments or temperature use ranges. In examples, while readable images may not be the intent of the present disclosure, a portion or an entirety of the display, panel, or window can be configured to respond to an incoming wavelength to change a portion or entirety of the display or panel to block or absorb the incoming or targeted wavelength bandwidth when detected either by a vehicle occupant or a detection system or sensor.

Additionally, functional additives, pigments, or dyes can be incorporated into the electrophoretic capsules to enhance the stability and performance of the system. These functional additives can include stabilizers, surfactants, and polymers to optimize the dispersion and movement of pigment particles. For example, the addition of a polymer having with high dielectric constant can improve the response time of the electrophoretic capsules. Examples include polydimethylsiloxane, or co-polymers including polyvinylidene fluoride.

The selection of pigments in electrophoretic capsules, and in particular for those used in articles and examples of the present disclosure, plays a crucial role in determining the visual characteristics of the display. Electrophoretic capsules may utilize a wide range of pigment materials, including organic and inorganic particles. Titanium dioxide is a common pigment used in electrophoretic capsules for its high reflectivity and light-scattering properties. Other examples of electrophoretic capsules can incorporate quantum dots, nanoscale semiconductor particles, to expand the color gamut and improve display quality. Examples include cadmium selenide quantum dots to enhance the color saturation and range of electrophoretic displays or provide additional transmissive, reflective, or absorbing properties. In still other examples, electrophoretic capsules can be designed to include multiple pigments, or have pigments in discrete, multiple layers, each with distinct absorption ranges, to provide a broader spectrum of colors and improve display quality. When combining capsules with pigments that absorb in the red, green, and blue regions of the spectrum, this can allow for the production of full-color displays. For example, an appropriate combination of pigments and the ability to control their respective positions within the capsules can enable a wide range of colors to be displayed. From monochrome to full-color displays, electrophoretic capsules can achieve vibrant and customizable visual effects. These colors can include black and white, grayscale, and vibrant, saturated colors.

An additional property exhibited by electrophoretic capsules is bi-stability, meaning that once a pigment is positioned within a capsule, it remains stable without the need for a continuous power supply. This property allows for low power consumption and a persistent display without color shifting until such time that the pigment is re-positioned. As such, a static image can be displayed for an extended period, up to several weeks, with minimal power consumption. Furthermore, structures including electrophoretic capsules require power only when changing the display content, which can ensure prolonged battery life for articles or devices incorporating these capsules. Other properties of these types of electrophoretic capsules include temperature stability upon exposure to -55°C and 85°C after at least 3 hour exposure periods, high-visibility under wide angle viewing under dark and light viewing conditions without backlight, thermal Management, solar absorptance and emittance, and drivability by remote, wireless power.

The use of electrophoretic capsules loaded with pigments targeted to block specific electromagnetic bandwidths, including consumer lasers, can find application in aerospace vehicle components. This can provide the ability to electrically switch pigments in a filter, window, coating, or other transparent structure which can intentionally absorb, reflect, transmit, or make transparent to electromagnetic radiation at one or more wavelengths. In examples including a multi-layer configuration, it can be possible for an article of the present disclosure to absorb at one or more wavelengths, reflect at one or more other wavelengths, or include combinations thereof.

In other examples, exemplary articles of the present disclosure can allow specific targeted wavelengths bandwidths to be blocked on-demand. An article can, for instance, allow a flight crew to switch on protection from a consumer laser. Such an article can also be used for a switchable reflector for a specific wavelength that could be activated depending on the situation or condition of an aircraft, such as a landing, in-theater, refueling, and the like.

While it is currently possible to coat transparencies or surfaces with pigments that can selectively absorb or reflect specific electromagnetic wavelengths they cannot be turned off or modified once applied. A traditional filter to protect a pilot from being blinded by a consumer laser could also restrict visibility as a secondary effect. Applying a coating to a combat vehicle that is highly reflective at a specific wavelength that could be useful for safety during certain environments or out of theater operations could also be exploited by an adversary, when in different environments. Differences between existing electrophoretic tinting technology and the articles and methods provided herein include the ability to intentionally reflect or absorb energy at specific wavelengths within the electromagnetic spectrum.

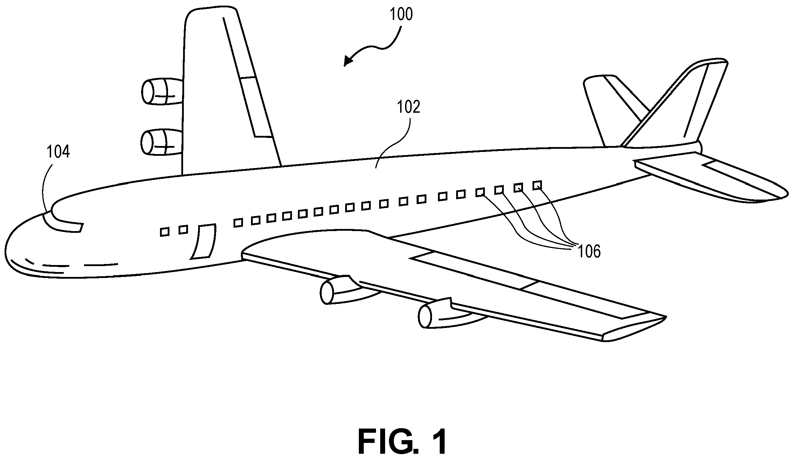

FIG. 1 is a schematic of an aerospace vehicle, in accordance with the present disclosure. A vehicle 100, in this instance, an airplane, is shown, having a vehicle body 102 or a hull. In several locations about the vehicle body 102 are located a windshield 104 towards a front of the vehicle 100 and along a side are several side windows 106. While the windshield 104 and side windows 106 are suitable locations for placement or incorporation of articles or devices of the present disclosure within a vehicle 100, there may be other advantageous locations for placement of such articles, including, but not limited to sensors or other areas of an aircraft or vehicle 100 that can be sensitive to attack or exposure to specific wavelengths as described herein. In addition to aircraft, other vehicles or structures can incorporate windows or similar articles such as described herein. These structures can include, but are not limited to greenhouses, automotive vehicles, marine vehicles, aerospace vehicles, and the like. The articles, windows, displays or films described herein can be used on any interior or exterior surface containing any type of electrophoretic capsules utilized to block a targeted wavelength bandwidth. In examples, the background color of exemplary panels can be tailored or color tuned as needed, and can be applied as a wavelength blocking film, to be applied in an internal structure of a window, or applied after construction using a pressure sensitive adhesive (PSA).

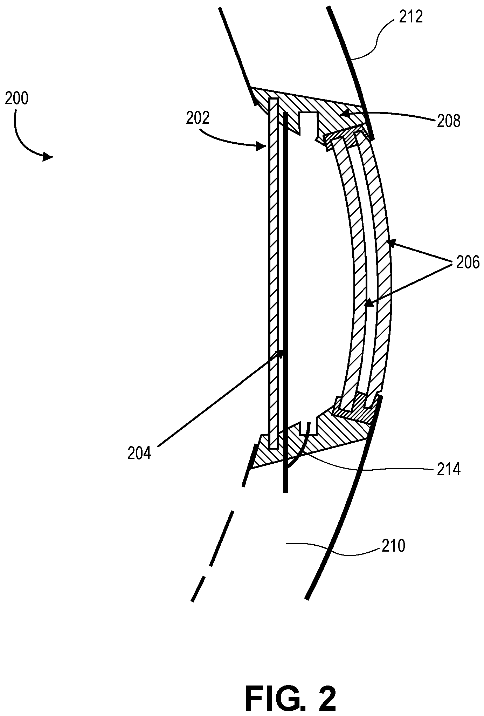

FIG. 2 is an exemplary schematic illustrating an article or window incorporating a structure including one or more pluralities of electrophoretic capsules, in accordance with the present disclosure. A window 200 is shown in cross-section. While an example window 200 structure is shown in FIG. 2, other arrangements may be possible, such as alternate orientations, positions or compositions, depending upon existing or newly designed vehicle components may be practiced by one skilled in the art. As shown in FIG. 2, a window 200 is shown, with a positionable dust cover 202 on an interior side of the window 200. There is also shown a first and second panels of the window 206 arranged on an exterior. A wavelength blocking film 204 is also shown, with an electrical connection 214 attached thereto, where all components are held in place or anchored to an interior window structure 208 within a bulk of the vehicle panel or component 210. It should be presumed that any targeted wavelength that an operator or passenger would like to block, absorb, or attenuate using the electrophoretic capability included in the wavelength blocking film 204, which will be further described in greater detail later, would be introduced or detected from an outer surface of the vehicle 212. Alternative arrangements or examples may include a windshield or sensor component for an aerospace vehicle, such as, but not limited to, an airplane. In examples, a sensor component or detector can be configured to detect a targeted wavelength range or wavelength of interest and be electrically connected to the wavelength blocking film 204 portion of the article or window such that the wavelength blocking film 204 is activated upon detection of a targeted wavelength bandwidth or specific wavelength of interest by the sensor or detector. When the wavelength blocking film 204 is activated, the targeted wavelength can be absorbed or blocked by the activated wavelength blocking film 204. A wavelength blocking film could be used in transparent materials such as windows or sensor covers. This wavelength blocking device or elements thereof could also be used as a coating on non-transparent surfaces either to enable or prevent detection.

In examples, the article can include an interior layer, an exterior layer that is parallel to the interior layer, a plurality of capsules disposed between the interior layer and the exterior layer, wherein the plurality of capsules comprise a functional additive or pigment as described herein. The interior layer and the exterior layer can be transparent across the visible and non-visible electromagnetic spectrum, including, but not limited to visible, ultraviolet, infrared, x-ray, or combinations thereof. The interior layer or the exterior layer can be or include polycarbonate, glass, or other transparent materials useful in window or display fabrication known to one skilled in the art.

The carrier layer disposed between the first layer and the second layer or within the wavelength blocking films of the present disclosure can include carrier layers that contains the plurality of capsules and permits free movement of each of the plurality of capsules within carrier layer materials such as, but not limited to physically transparent materials that are operative over a wide range of temperatures, such as silicones, water with or without additives to resist freezing or boiling, and the like. Examples utilizing silicone can result in slower, on the order of 1 ms, switching. This switching speed can also be dependent upon temperature, viscosity, or other factors. In examples, functional additives can include a negatively charged component and/or a positively charged component contained within each of the plurality of capsules, where the functional additive is switchable to a first state and a second state. Examples can include windows or viewing elements or optics within eyewear, aerospace vehicles, and the like.

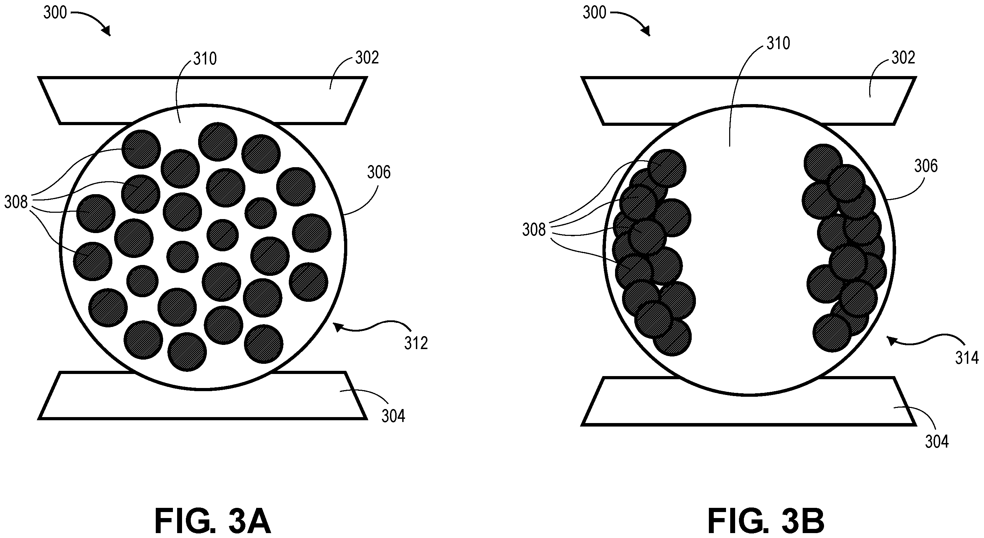

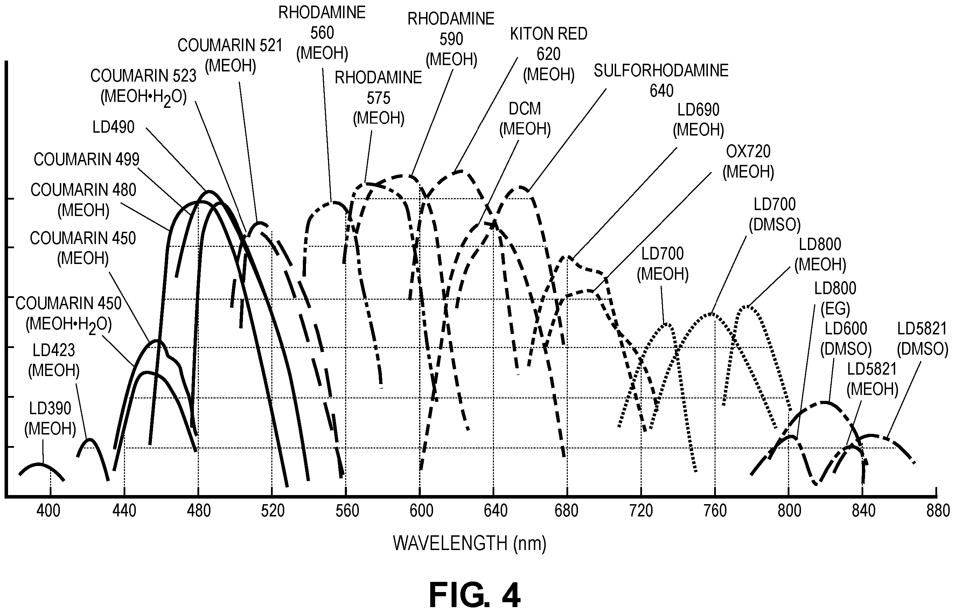

FIGS. 3A and 3B are schematic of an electrophoretic capsule, in a first state and a second state, respectively, in accordance with the present disclosure. FIG. 3A shows an electrophoretic capsule assembly 300 showing a capsule in a first activated state 312. The electrophoretic capsule 312 is sandwiched between a first electrode layer 302 and a second electrode layer 304. The first electrode layer 302 and second electrode layer 304 are configured to introduce a charge or bias to a plurality of pigment or functional additive particles 308 contained within a capsule outer shell 306 of the capsule to place the capsule in the first activated state 312. When activated, the plurality of pigment or functional additive particles 308 are free to move within a carrier layer 310 also contained within the capsule outer shell 306 of the capsule 312 and distribute within the carrier layer 310 such that the plurality of pigment or functional additive particles 308 fill the capsule 312 in such a manner that a targeted wavelength bandwidth of light can be blocked from passing or transmitting through the capsule 312. In other words, when the system is activated, the capsules containing wavelength absorbing particles cover the screen to filter targeted wavelengths of light. In certain examples, the type of the plurality of pigment or functional additive particles 308 can be selected or designed such that a targeted wavelength of light introduced into a capsule, or a film incorporating a plurality of capsules in a first activated state 312 is reflected, rather than absorbed. Examples of absorbing pigments or additives are further described in regard to FIG. 4. Examples of reflecting additives or pigments in the ranges described herein can include titanium dioxide, glass, mica, and others known to one skilled in the art.

FIG. 3B shows an electrophoretic capsule assembly 300 showing a capsule in a second inactive state 314. The electrophoretic capsule 314 is sandwiched between a first electrode layer 302 and a second electrode layer 304. The first electrode layer 302 and second electrode layer 304 are configured to introduce a charge or bias to a plurality of pigment or functional additive particles 308 contained within a capsule outer shell 306 of the capsule to place the capsule in the second activated state 314. When inactivated, the plurality of pigment or functional additive particles 308 are free to move within a carrier layer 310 also contained within the capsule outer shell 306 of the capsule 314 and distribute within the carrier layer 310 such that the plurality of pigment or functional additive particles 308 are directed towards the capsule outer shell 306 in such a manner that a targeted wavelength of light can be permitted to pass or transmit through the capsule 314 or pass through a film incorporating a plurality of capsules in a second activated state 314. As such, when the system is disabled, the capsules 314 move to the sides, to create a transparent opening through the electrophoretic capsule assembly 300. In examples of electrophoretic capsule assemblies, the electrode layers 302, 304 can be embedded within a window pane or layer of a structured window as described herein, or be a freestanding, flexible film, or combination thereof.

In examples, these capsule or microcapsules can be approximately about the diameter of a human hair and contain a black pigment. Within each microcapsule, the pigment can move from side to side when power is applied. When pigments or functional additives move to the sides of the capsule, a transparent opening can be made which can be seen through, or transmit light. When pigments or functional additives scatter, they fill in the capsule to create a closed, blocking, absorbing, or dark state. The functional additive comprises a pigment, more than one pigment, a pigment that absorbs light in a targeted wavelength, a pigment that absorbs light in one or more distinct targeted wavelengths or wavelength bandwidths, or the use or incorporation of organic and/or inorganic pigments into the electrophoretic particle capable of filtering specific wavelengths, thus rendering the microcapsules transparent in one state (inactive) as compared to non-transparent in another state (active). The size of the pigments, functional additives, or quantum dots can be from about 1 nm to about 20 microns. The pigments, functional additives, quantum dots, or other components can block or absorb green or red lasers, high powered lasers such as ND:YAG lasers, high-powered laser diodes, and others that can be damaging or dangerous to the human eye.

In examples, multiple films can alternatively be used to block multiple wavelengths or bandwidths. In still other examples, the system for blocking or absorbing wavelengths can include one or more detectors, to detect red, blue, green, UV, IR for wavelength to target the correct range, within a system including multiple functional additives or layers of films. Further, a detector could send a signal to switch on an assembly having multiple layers, thereby filtering out specific wavelength bandwidths on demand. In addition, the articles or systems of the present disclosure can include their use as a bandpass filter, for example blocking or absorbing everything above or below a first wavelength or a second wavelength, a narrow band absorber, or a targeted wavelength above or below a certain wavelength. Other applications for systems or articles described herein can include Particle Image Velocimetry (PIV) used for tracking individual droplets in structures such as wind tunnels, or in windows for greenhouses. For example, tuning windows or panels or films to couple into the chlorophyll could be advantageous.

FIG. 4 is a plot depicting a number of wavelength ranges corresponding to several exemplary pigments or functional additives, in accordance with the present disclosure. As shown in the plot depicted in FIG. 4, there are a number of dyes that can absorb in discrete wavelength ranges across the visible spectrum, or from the range shown in the plot, or from about 400 nm to about 880 nm. The various dyes depicted in the plot can be used to absorb laser or light energy in the regions as indicated. In examples, dyes such as those shown can be combined with pigments or other functional additives, which can include charge control agents, flow agents, or other compatibilizing particle treatments that can, for example, serve to optimized pigment or dye movement within the carrier layer or carrier liquid of the electrophoretic capsules. Characteristic properties of the dyes or pigments used for blocking, absorbing, or reflecting targeted wavelengths can include strong absorption at targeted wavelength, a high quantum yield, for example, from 0.5-1.0, a good photochemical stability, short fluorescence lifetime, or from about 5-10 ns, for example.

Illustrative dyes include, but are not limited to coumarin-based dyes, xanthene-based dyes, oxazine dye, boron-dipyrromethene dyes, or combinations thereof. Specific examples can include Fluorescein, LD390, LD423, Coumarin 450, Coumarin 480, Coumarin 499, Coumarin 523, Coumarin 521, Coumarin 6, Coumarin 102, Coumarin 314, Eosin Y, Rhodamine B, Rhodamine 6G, Rhodamine 123, Rhodamine 560, Rhodamine 575, Rhodamine 590, Kiton red, DCM, sulforhodamine 640, LD690, OX720, LD800, LD600, LD5821, Rose Bengal, Oxazine 170, Oxazine 720, Oxazine 750, Nile Blue A, Methylene Blue, BODIPY 493/504, BODIPY 530/550, BODIPY 581/591, BODIPY 630/650, BODIPY 665/676, and the like.

Illustrative pigments include, but are not limited to, carbon black, titanium dioxide, iron oxides such as red iron oxide, yellow iron oxide, and black iron oxide, ultramarine blue, cadmium-based pigments, including cadmium red, cadmium yellow, and cadmium orange, prussian blue, chromium oxide green, phthalocyanine blue and green pigments, naphthol red, perylene red, quinacridone magenta, and the like. In other examples, spectrally-selective absorber molecules or quantum dots can be incorporated into mixtures of pigments or dyes, or other additives to function in electrophoretic capsules and films or articles made therefrom, as described herein.

While the scope of protection is determined by the appended claims, realizations of the present disclosure can be made in many ways including the following:
Clause 1. A window (200), comprising:
   a first layer;
   a second layer that is substantially parallel to the first layer; and
   a plurality of capsules (312, 314) disposed between the first layer and the second layer; and wherein
   the plurality of capsules (312, 314) comprise a functional additive contained within each of the plurality of capsules (312, 314); and
   the functional additive is switchable to a first state and a second state.
Clause 2. The window (200) of Clause 1, wherein the functional additive comprises a negatively charged component (210) and a positively charged component (210).
Clause 3. The window (200) of Clause 1, wherein the functional additive absorbs light in a wavelength bandwidth.
Clause 4. The window (200) of Clause 3, wherein the wavelength bandwidth is from 520 nm to about 532 nm or from about 630 nm to about 670 nm.
Clause 5. The window (200) of Clause 1, wherein the functional additive comprises a plurality of quantum dots.
Clause 6. The window (200, 206) of Clause 1, wherein the functional additive comprises one or more pigments.
Clause 7. The window (200, 206) of Clause 6, wherein the functional additive comprises a colorant.
Clause 8. The window (200) of Clause 1, wherein the first layer and the second layer are transparent in a wavelength range of from about 380 nm to about 700 nm.
Clause 9. The window (200) of Clause 1, wherein:
   the first layer comprises polycarbonate, glass, or a combination thereof; and
   the second layer comprises polycarbonate, glass, or a combination thereof.
Clause 10. The window (200) of Clause 1, further comprising a surface charge-controlled layer in proximity to the first layer or the second layer.
Clause 11. The window (200) of Clause 1, wherein a first state comprises transparency in a first wavelength bandwidth and a second state comprises absorbance in a second wavelength bandwidth.
Clause 12. The window (200) of Clause 11, wherein the first wavelength bandwidth is between a wavelength of 380 nm to about 700 nm.
Clause 13. The window (200, 206) of Clause 11, wherein the second wavelength bandwidth is between a wavelength of 380 nm to about 700 nm.
Clause 14. The window (200) of Clause 1, wherein a size of each of the plurality of capsules (314) is from about 15 to about 100 microns.
Clause 15. The window (200) of Clause 1, further comprising a carrier layer (310) (310) disposed between the first layer and the second layer, wherein the carrier layer (310) (310) comprises the plurality of capsules (312, 314) and permits free movement of each of the plurality of capsules (312, 314).
Clause 16. A window (200), comprising:
   a first layer;
   a second layer that is substantially parallel to the first layer; and
   a plurality of capsules (312, 314) disposed between the first layer and the second layer; and wherein:
      the plurality of capsules (312, 314) comprise a functional additive comprising a negatively charged component (210) and a positively charged component (210) contained within each of the plurality of capsules (312, 314); and
      the functional additive is switchable to a first state and a second state.
Clause 17. The window (200) of Clause 16, wherein a gap between the first layer and the second layer is from about 80 microns to about 150 microns.
Clause 18. The window (200) of Clause 16, wherein the window (200) is a component (210) of eyewear.
Clause 19. The window (200) of Clause 16, wherein the window (200) is a component (210) of an aerospace vehicle (100, 212).
Clause 20. A system for blocking a wavelength, comprising:
   a detector capable of detecting a target wavelength bandwidth;
   a first layer connected to the detector;
   a second layer that is substantially parallel to the first layer and connected to the detector; and
   a plurality of capsules (312, 314) disposed between the first layer and the second layer;
   a surface charge-controlled layer in proximity to the first layer or the second layer, connected to the detector and configured to switch one or more of the plurality of capsules (312, 314) from a first state to a second state upon detection of the target wavelength bandwidth; and wherein:
      the plurality of capsules (312, 314) comprise a functional additive comprising a negatively charged component (210) and a positively charged component (210) contained within each of the plurality of capsules (314);
      the functional additive is switchable to a first state and a second state; and
      the functional additive absorbs the target wavelength bandwidth upon switching to the second state.

While the present teachings have been illustrated with respect to one or more implementations, alterations and/or modifications may be made to the illustrated examples without departing from the spirit and scope of the appended claims. For example, it may be appreciated that while the process is described as a series of acts or events, the present teachings are not limited by the ordering of such acts or events. Some acts may occur in different orders and/or concurrently with other acts or events apart from those described herein. Also, not all process stages may be required to implement a methodology in accordance with one or more aspects or embodiments of the present teachings. It may be appreciated that structural objects and/or processing stages may be added, or existing structural objects and/or processing stages may be removed or modified. Further, one or more of the acts depicted herein may be carried out in one or more separate acts and/or phases. Furthermore, to the extent that the terms "including," "includes," "having," "has," "with," or variants thereof are used in either the detailed description and the claims, such terms are intended to be inclusive in a manner similar to the term "comprising." The term "at least one of" is used to mean one or more of the listed items may be selected. Further, in the discussion and claims herein, the term "on" used with respect to two materials, one "on" the other, means at least some contact between the materials, while "over" means the materials are in proximity, but possibly with one or more additional intervening materials such that contact is possible but not required. Neither "on" nor "over" implies any directionality as used herein. The term "conformal" describes a coating material in which angles of the underlying material are preserved by the conformal material. The term "about" indicates that the value listed may be somewhat altered, as long as the alteration does not result in nonconformance of the process or structure to the illustrated embodiment. The terms "couple," "coupled," "connect," "connection," "connected," "in connection with," and "connecting" refer to "in direct connection with" or "in connection with via one or more intermediate elements or members." Finally, the terms "exemplary" or "illustrative" indicate the description is used as an example, rather than implying that it is an ideal. Other embodiments of the present teachings may be apparent to those skilled in the art from consideration of the specification and practice of the disclosure herein. It is intended that the specification and examples be considered as exemplary only, while the scope of protection is determined by the following claims.

## Claims

1. A window (200), comprising:
a first layer;
a second layer that is substantially parallel to the first layer; and
a plurality of capsules (312, 314) disposed between the first layer and the second layer; and wherein
the plurality of capsules (312, 314) comprise a functional additive contained within each of the plurality of capsules (312, 314); and
the functional additive is switchable to a first state and a second state.

2. The window (200) of claim 1, wherein the functional additive comprises a negatively charged component and a positively charged component.

3. The window (200) of claim 1 or 2, wherein the functional additive absorbs light in a wavelength bandwidth, preferably wherein the wavelength bandwidth is from 520 nm to about 532 nm or from about 630 nm to about 670 nm.

4. The window (200) of claim 1, wherein the functional additive comprises a plurality of quantum dots.

5. The window (200, 206) of claim 1, wherein the functional additive comprises one or more pigments, preferably wherein the functional additive comprises a colorant.

6. The window (200) of any one of the preceding claims, wherein the first layer and the second layer are transparent in a wavelength range of from about 380 nm to about 700 nm.

7. The window (200) of any one of the preceding claims, wherein:
the first layer comprises polycarbonate, glass, or a combination thereof; and
the second layer comprises polycarbonate, glass, or a combination thereof.

8. The window (200) of any one of the preceding claims, further comprising a surface charge-controlled layer in proximity to the first layer or the second layer.

9. The window (200) of any one of the preceding claims, wherein a first state comprises transparency in a first wavelength bandwidth and a second state comprises absorbance in a second wavelength bandwidth.

10. The window (200) of claim 9, wherein at least one of:
the first wavelength bandwidth is between a wavelength of 380 nm to about 700 nm; and/or
the second wavelength bandwidth is between a wavelength of 380 nm to about 700 nm.

11. The window (200) of any one of the preceding claims, wherein a size of each of the plurality of capsules (314) is from about 15 to about 100 microns.

12. The window (200) of any one of the preceding claims, further comprising a carrier layer (310) disposed between the first layer and the second layer, wherein the carrier layer (310) comprises the plurality of capsules (312, 314) and permits free movement of each of the plurality of capsules (312, 314).

13. The window (200) of claim 2, wherein a gap between the first layer and the second layer is from about 80 microns to about 150 microns.

14. The window (200) of claim 13, wherein the window (200) is configured as a component (210) of eyewear or as a component (210) of an aerospace vehicle (100, 212).

15. A system for blocking a wavelength, comprising:
a window (200) according to claim 1;
a detector capable of detecting a target wavelength bandwidth and connected to the first and second layer;
a surface charge-controlled layer in proximity to the first layer or the second layer, connected to the detector and configured to switch one or more of the plurality of capsules (312, 314) from the first state to the second state upon detection of the target wavelength bandwidth; and wherein:
the plurality of capsules (312, 314) comprise a functional additive comprising a negatively charged component (210) and a positively charged component (210) contained within each of the plurality of capsules (314);
the functional additive is switchable to a first state and a second state; and
the functional additive absorbs the target wavelength bandwidth upon switching to the second state.
